# EUROPEAN PATENT APPLICATION

(11) **EP 3 614 626 A1**
(43) Date of publication of application: **26.02.2020**
(21) Application number: 18787589.3
(22) Date of filing: 17.04.2018
(51) Int. Cl.: H04L 12/24

(54) **POTN SYSTEM, POTN INTERCOMMUNICATION MODULE, AND PACKET INTERCOMMUNICATION METHOD**

(30) Priority: 17.04.2017 CN 201710250220
(71) Applicant: ZTE Corporation, Shenzhen, Guangdong 518057 (CN)
(72) Inventor: DONG, Jianquan, Shenzhen Guangdong 518057 (CN); YIN, Shaoge, Shenzhen Guangdong 518057 (CN); LIU, Xiaodong, Shenzhen Guangdong 518057 (CN); ZHAO, Lina, Shenzhen Guangdong 518057 (CN); ZONG, Hui, Shenzhen Guangdong 518057 (CN); HAN, Lu, Shenzhen Guangdong 518057 (CN)
(74) Representative: Lavoix
(86) International application number: PCT/CN2018/083388
(87) International publication number: WO 2018/192494

(57) **Abstract**

Disclosed is a POTN system including a PTN module, an OTN module, and a POTN interworking module. The POTN interworking module is configured to perform at least one of: receiving an Ethernet packet of a PTN service accessed by the PTN module and converting the Ethernet packet into an ODUk packet; or receiving an ODUk packet of an OTN service accessed by the OTN module and converting the ODUk packet into an Ethernet packet. Further disclosed are the POTN interworking module and a packet interworking method.

## Description

### TECHNICAL FIELD

The present disclosure relates to the field of communications and, for example, to a packet optical transport network (POTN) system, a POTN interworking module and a packet interworking method.

### BACKGROUND

With the continuous development of communication technologies, the main network types in the current transport network include a packet transport network (PTN), an optical transport network (OTN), and a multi-service transfer platform (MSTP) based on a synchronous digital hierarchy (SDH). For example, most traditional public switched telephone networks (PSTNs) are based on a time division multiplexing (TDM) technology and perform transmissions through an OTN access, while some PSTNs mainly relate to Internet Protocol (IP) services and perform transmissions by accessing the PTN based on an Ethernet technology. These communication technologies and devices meet people's daily needs such as talking and Internet browsing.

With continuous evolution and merging of transport networks, an operator needs to further merge the OTN and the PTN, so that a POTN emerges. However, currently interworking through a POTN device has large limitations: an OTN access device can only interwork with an OTN device, and a PTN access device can only interwork with a PTN device. Due to the above limitations, in order to implement interworking between an OTN service and a PTN service, a network cutover operation is required to reorganize an existing network, which requires a lot of manpower and financial resources, and customers' use is affected during the network reorganizing. In addition, a comprehensive reorganizing will be a huge project due to a large number of points distributed in the communication network.

### SUMMARY

Embodiments of the present application provides a POTN system, a POTN interworking module, and a packet interworking method, which may implement interworking between a PTN terminal and an OTN terminal in the POTN system without reorganizing an existing network, thereby improving an integration level of the POTN system and reducing deployment costs of a POTN.

The embodiments of the present application provide a POTN system including a PTN module, an OTN module and a POTN interworking module. The POTN interworking module is configured to be connected to the PTN module and the OTN module separately; and the POTN interworking module is configured to perform at least one of: receiving a first Ethernet packet of a PTN service accessed by the PTN module and converting the first Ethernet packet into a first optical channel data unit (ODUk) packet; or receiving a second ODUk packet of an OTN service accessed by the OTN module and converting the second ODUk packet into a second Ethernet packet.

The embodiments of the present application further provide a POTN interworking module including a framing unit.

The framing unit is configured to perform at least one of: converting a first Ethernet packet into a first ODUk packet, or converting a second ODUk packet into a second Ethernet packet.

The embodiments of the present application further provide a packet interworking method which is applied to a packet optical transport network (POTN) interworking module. The method includes steps described below.

The POTN interworking module receives a first Ethernet packet of a PTN service accessed by a PTN module and converts the first Ethernet packet into a first ODUk packet. The POTN interworking module receives a second ODUk packet of an OTN service accessed by an OTN module and converts the second ODUk packet into a second Ethernet packet.

The embodiments can implement direct interworking between the PTN terminal and the OTN terminal in the POTN system without reorganizing the existing network, thereby reducing frequent reorganizing in a customer network maintenance process, avoiding wastes of transport network bandwidth and related hardware resources, improving transmission flexibility of communication network services and a service processing capability and service transmission efficiency of an existing network device, and promoting further merging and optimization of the POTN.

### BRIEF DESCRIPTION OF DRAWINGS

FIG. 1 is a schematic diagram illustrating network architecture of interconnections through a POTN in an embodiment;
FIG. 2 is a schematic diagram of a PTN terminal docked with an OTN terminal in an embodiment;
FIG. 3 is a schematic diagram illustrating a network structure of a POTN system in an embodiment;
FIG. 4 is a schematic diagram illustrating service flows of a POTN system in an embodiment;
FIG. 5 is a schematic diagram of a POTN system in an embodiment;
FIG. 6 is a schematic diagram illustrating a network structure of a POTN system in an embodiment;
FIG. 7 is a schematic diagram illustrating service flows of a POTN system in an embodiment;
FIG. 8 is a structural diagram of a POTN interworking module in an embodiment;
FIG. 9 is a schematic diagram illustrating an internal mapping configuration of a POTN interworking module in an embodiment;
FIG. 10 is a schematic diagram of a PTN terminal docked with an OTN terminal in an embodiment;
FIG. 11 is a schematic diagram of an embodiment 1; and
FIG. 12 is a schematic diagram of an embodiment 2.

### DETAILED DESCRIPTION

The embodiments of the present application are described below in detail in conjunction with the drawings. The embodiments described hereinafter are only used to describe and explain the present application and not to limit the present application.

The steps illustrated in the flowcharts among the drawings may be executed by a computer system such as a group of computers capable of executing instructions. Although logical sequences are shown in the flowcharts, the illustrated or described steps may be performed in sequences different from those described herein in some cases.

A requirement on a POTN system is interworking between a PTN device and an OTN device, for example, interworking between a Voice over Internet Protocol (VOIP) terminal based on Ethernet access and a PSTN fixed telephone based on traditional SDH access, and interworking between a third-generation mobile communication technology (3G)/fourth-generation mobile communication technology (4G) network based on Ethernet access and a PSTN based on the traditional SDH access. A requirement on the POTN is to implement conversions and interworking of different protocol packet formats between a PTN service and an OTN service.

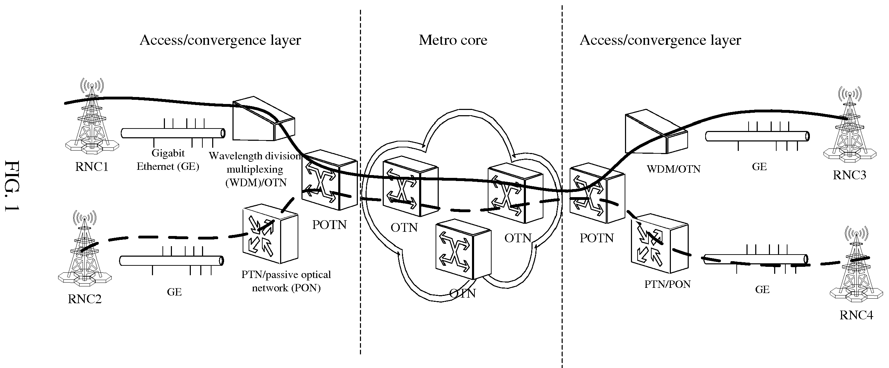

FIG. 1 is a schematic diagram illustrating network architecture of interconnections through a POTN in an embodiment. As shown in FIG. 1, a 3G radio network (including a radio network controller (RNC) 1, an RNC2, an RNC3, an RNC4, and the like) is accessed through the PTN device or the OTN device at an access/convergence layer and converged on backbone OTNs through a POTN device to implement metro-level service transmissions and interworking. However, currently interworking through the POTN device has large limitations: an OTN access device can only interwork with a peer OTN device (as shown by a solid line in FIG. 1, the RNC1 interworks with the RNC3), and a PTN access device can only interwork with a peer PTN device (as shown by a dashed line in FIG. 1, the RNC2 interworks with the RNC4).

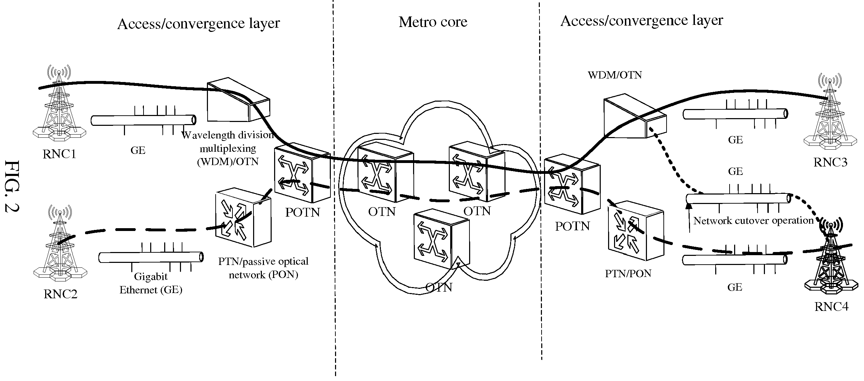

FIG. 2 is a schematic diagram of a PTN terminal docked with an OTN terminal in an embodiment. As shown in FIG. 2, due to the above limitations, to implement interworking between the RNC 1 (the OTN service) and the RNC 4 (the PTN service) in FIG. 2, a network cutover operation is required, that is, the RNC4 is cut from an original PTN and connected to an OTN where the RNC3 is located, and an optical transport channel indicated by a solid line in FIG. 2 of the OTN is used for the interworking. The network cutover operation is still required for interworking between the RNC3 and the RNC4 in a same city, and a new hardware board needs to be deployed in a newly-accessed network device. This embodiment provides a POTN system, a POTN interworking module, and a packet interworking method, which can implement direct interworking between a PTN terminal and an OTN terminal in the POTN system, so as to reduce frequent transformations in a customer network maintenance process, avoiding wastes of transport network bandwidth and related hardware resources, and promoting further merging and optimization of the POTN.

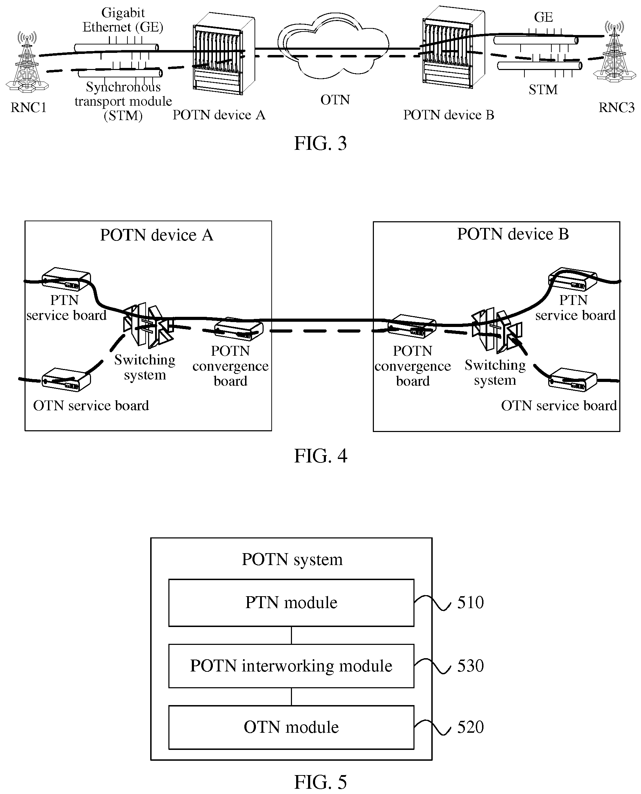

In an embodiment, a network structure and a transmission manner of the POTN system may be referred to FIG. 3 and FIG. 4. In FIGS. 3 and 4, a solid line indicates a PTN service data stream, and a dashed line indicates an OTN service data stream.

A path of the PTN service data stream may be a PTN service board of a POTN device A ==> a switching system of the POTN device A ==> a POTN convergence board of the POTN device A ==> the OTN ==> a POTN convergence board of a POTN device B==> a switching system of the POTN device B==> a PTN service board of the POTN device B. Alternatively, the path of the PTN service data stream may be the PTN service board of the POTN device B ==> the switching system of the POTN device B ==> the POTN convergence board of the POTN device B ==> the OTN ==> the POTN convergence board of the POTN device A==> the switching system of the POTN device A==> the PTN service board of the POTN device A.

A path of the OTN service data stream may be an OTN service board of the POTN device A ==> the switching system of the POTN device A ==> the POTN convergence board of the POTN device A ==> the OTN ==> the POTN convergence board of the POTN device B==> the switching system of the POTN device B==> an OTN service board of the POTN device B. Alternatively, the path of the OTN service data stream may be the OTN service board of the POTN device B ==> the switching system of the POTN device B ==> the POTN convergence board of the POTN device B ==> the OTN ==> the POTN convergence board of the POTN device A==> the switching system of the POTN device A==> the OTN service board of the POTN device A.

The POTN convergence board only converges and transports a PTN service class and an OTN service class and cannot realize switching of PTN service data and OTN service data. In other words, the PTN service data stream and the OTN service data stream cannot interwork with each other in the POTN device, and the only way is to converge, in the POTN device (for example, the POTN device A), the two service data streams on the POTN convergence board and transport the two service data streams to the peer POTN device (for example, the POTN device B). Apparently, the current POTN system cannot support a direct mapping function between an Ethernet packet format of the PTN service and an ODUk packet format of the OTN service.

As shown in FIG. 5, an embodiment of the present invention provides a POTN system. The POTN system includes a PTN module 510, an OTN module 520, and a POTN interworking module 530.

The POTN interworking module 530 is configured to be connected to the PTN module 510 and the OTN module 520 separately.

The POTN interworking module 530 is configured to perform at least one of: receiving a first Ethernet packet of a PTN service accessed by the PTN module 510 and converting the first Ethernet packet into a first optical channel data unit (ODUk) packet; or receiving a second ODUk packet of an OTN service accessed by the OTN module 520 and converting the second ODUk packet into a second Ethernet packet.

In this embodiment, the POTN interworking module in the POTN system can further improve an integration level and scalability of the POTN system, and support direct switching and interworking between a PTN service data stream (corresponding to an Ethernet packet) and an OTN service data stream (corresponding to an ODUk packet) in the POTN system.

In an exemplary implementation manner, the POTN interworking module 530 may include a framing unit, which is configured to implementing a mapping between the Ethernet packet and the ODUk packet. For example, the framing unit may encapsulate the Ethernet packet through a generic framing procedure (GFP) and map the Ethernet packet to an ODUk protocol frame, or the framing unit may decapsulate the ODUk protocol frame through the GFP and map the ODUk protocol frame to the Ethernet packet.

In an exemplary implementation manner, the framing unit may include an Ethernet processing subunit, a storage buffer subunit, an OTN mapping subunit, and an ODUk switching subunit.

The framing unit may be configured to map the first Ethernet packet to the first ODUk packet in a manner described below.

The Ethernet processing subunit is configured to process the received first Ethernet packet to obtain a service signal carried in the first Ethernet packet, the storage buffer subunit is configured to buffer the service signal carried in the first Ethernet packet, the OTN mapping subunit is configured to encapsulate the service signal carried in the first Ethernet packet through the GFP to obtain the first ODUk packet, and the ODUk switching subunit transmits the first ODUk packet.

The framing unit may be configured to map the second ODUk packet to the second Ethernet packet in a manner described below.

The ODUk switching subunit is configured to receive the second ODUk packet, the OTN mapping subunit is configured to decapsulate the second ODUk packet through the GFP to obtain a service signal, the storage buffer subunit is configured to buffer the service signal obtained by decapsulating the second ODUk packet, and the Ethernet processing subunit is configured to encapsulate the service signal obtained by decapsulating the second ODUk packet into the second Ethernet packet.

In an exemplary implementation manner, the POTN interworking module 530 may further include a control unit. The control unit is connected to the framing unit, and configured to receive an external control command and configure the framing unit through a control bus.

In an exemplary implementation manner, the POTN interworking module 530 may further include a switching unit. The switching unit is connected to the framing unit.

The POTN interworking module 530 may be configured to convert the second ODUk packet of the OTN service accessed by the OTN module 520 into the second Ethernet packet in a manner described below.

The switching unit is configured to receive the second ODUk packet of the OTN service accessed by the OTN module 520, and forward the second ODUk packet to the framing unit; and the framing unit is configured to decapsulate the received second ODUk packet through the GFP and obtain the second Ethernet packet by mapping.

In an exemplary implementation manner, the POTN interworking module further includes a network processing unit.

The network processing unit is connected to the switching unit and the framing unit separately.

The POTN interworking module is configured to convert the first Ethernet packet of the PTN service accessed by the PTN module into the first ODUk packet in a manner described below.

The switching unit is configured to receive the first Ethernet packet of the PTN service accessed by the PTN module, and forward the first Ethernet packet to the network processing unit; the network processing unit is configured to process the first Ethernet packet, and forward the processed first Ethernet packet to the framing unit; and the framing unit is configured to encapsulate the received first Ethernet packet through the GFP and obtain the first ODUk packet by mapping.

In this implementation manner, after a corresponding packet is obtained through a conversion, the framing unit may forward the corresponding packet to the switching unit, and the switching unit transports the corresponding packet to a switching system.

In this implementation manner, the switching unit is configured to process data interactions and transmissions in the POTN system to implement a cell and packet switching technology; and the network processing unit is configured to process and encapsulate Ethernet packets of the PTN service. For example, the network processing unit is configured to classify the Ethernet packets, and tag different classes of Ethernet services and perform related Quality of Service (QoS) processing.

In this implementation manner, the POTN interworking module 530 may further include a control unit. The control unit is connected to the switching unit, the network processing unit, and the framing unit through the control bus. The control unit is configured to receive the external control command and configure the switching unit, the network processing unit, and the framing unit through the control bus.

In an embodiment, functions implemented by the switching unit and the network processing unit may be integrated in the framing unit, or the functions implemented by the switching unit and the network processing unit may be integrated in a unit independent of the framing unit. This is not limited in the present application.

In an exemplary implementation manner, the POTN system may further include a POTN convergence module. The POTN convergence module is configured to converge the first Ethernet packet of the PTN service and converge the second ODUk packet of the OTN service, and transport the converged first Ethernet packet and the converged second ODUk packet.

In an exemplary implementation manner, the POTN interworking module 530 may be further configured to: after converting the first Ethernet packet of the PTN service accessed by the PTN module 510 into the first ODUk packet, forward the first ODUk packet to the OTN module 520 or the POTN convergence module.

The POTN interworking module may be further configured to: after converting the second ODUk packet of the OTN service accessed by the OTN module 520 into the second Ethernet packet, forward the second Ethernet packet to the PTN module 510 or the POTN convergence module.

In an exemplary implementation manner, the POTN interworking module 530 may be disposed on a POTN convergence board; or the POTN interworking module 530 may be a separate board; or the POTN interworking module 530 may be disposed on a switching system board.

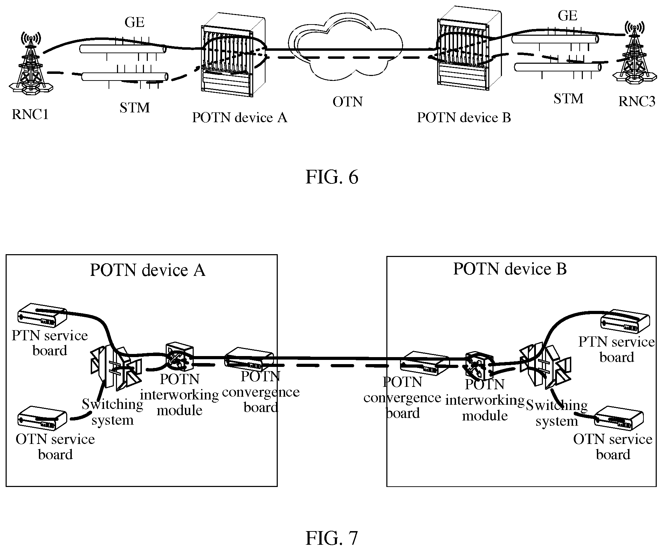

With reference to FIGS. 6 and 7, in an example in which the POTN system is applied to a POTN device, the PTN module may be a PTN service board, the OTN module may be an OTN service board, and the POTN interworking module may be a separate board in the POTN device.

In FIG. 6 and FIG. 7, if the POTN device (for example, a POTN device A) needs to support direct interworking between the PTN service and the OTN service, a service flow in the POTN device A may be the PTN service board ==> a switching system == > the POTN interworking module ==> the switching system ==> the OTN service board. Alternatively, the traffic flow in the POTN device A may be the OTN service board ==> the switching system ==> the POTN interworking module ==> the switching system ==> the PTN service board.

If two inter-city POTN devices (for example, the POTN device A and a POTN device B) need to support direct interworking between a PTN terminal and an OTN terminal, a service flow may be the PTN service board of the POTN device A ==> the switching system of the POTN device A ==> the POTN interworking module of the POTN device A ==> a POTN convergence board of the POTN device A ==> an OTN ==> a POTN convergence board of the POTN device B ==> a POTN interworking module of the POTN device B = => a switching system of the POTN device B ==> an OTN service board of the POTN device B. Alternatively, the service flow may be: the OTN service board of the POTN device A ==> the switching system of the POTN device A ==> the POTN interworking module of the POTN device A ==> the POTN convergence board of the POTN device A ==> the OTN ==> the POTN convergence board of the POTN device B ==> the POTN interworking module of the POTN device B ==> the switching system of the POTN device B ==> a PTN service board of the POTN device B. Alternatively, the service flow may be the PTN service board of the POTN device A <== the switching system of the POTN device A <== the POTN interworking module of the POTN device A <== the POTN convergence board of the POTN device A <== the OTN <== the POTN convergence board of the POTN device B <== the POTN interworking module of the POTN device B <== the switching system of the POTN device B <== the OTN service board of the POTN device B. Alternatively, the service flow may be: the OTN service board of the POTN device A <== the switching system of the POTN device A <== the POTN interworking module of the POTN device A <== the POTN convergence board of the POTN device A <== the OTN <== the POTN convergence board of the POTN device B <== the POTN interworking module of the POTN device B <== the switching system of the POTN device B <== the PTN service board of the POTN device B.

An embodiment of the present application further provides a POTN interworking module including a framing unit. The framing unit is configured to perform at least one of: converting a first Ethernet packet into a first ODUk packet, or converting a second ODUk packet into a second Ethernet packet.

The first Ethernet packet may be a first Ethernet packet of a PTN service accessed by a PTN module, and the second ODUk packet may be a second ODUk packet of an OTN service accessed by an OTN module.

In an exemplary implementation manner, the framing unit may include an Ethernet processing subunit, a storage buffer subunit, an OTN mapping subunit, and an ODUk switching subunit.

The Ethernet processing subunit is configured to process the received first Ethernet packet to obtain a service signal carried in the first Ethernet packet, the storage buffer subunit is configured to buffer the service signal carried in the first Ethernet packet, the OTN mapping subunit is configured to encapsulate the service signal carried in the first Ethernet packet through a GFP to obtain the first ODUk packet, and the ODUk switching subunit is configured to transmit the first ODUk packet.

Alternatively, the ODUk switching subunit is configured to receive the second ODUk packet, the OTN mapping subunit is configured to decapsulate the second ODUk packet through the GFP to obtain a service signal, the storage buffer subunit is configured to buffer the service signal obtained by decapsulating the second ODUk packet, and the Ethernet processing subunit is configured to encapsulate the service signal obtained by decapsulating the second ODUk packet into the second Ethernet packet.

In an exemplary implementation manner, the POTN interworking module may further include a control unit. The control unit is connected to the framing unit, and configured to receive an external control command and configure the framing unit through a control bus.

In an exemplary implementation manner, the POTN interworking module may further include a switching unit. The switching unit is connected to the framing unit.

The switching unit is configured to receive the second ODUk packet of the OTN service accessed by the OTN module, and forward the second ODUk packet to the framing unit. The framing unit is configured to decapsulate the received second ODUk packet through the GFP and obtain the second Ethernet packet by mapping.

In an exemplary implementation manner, the POTN interworking module may further include a network processing unit.

The network processing unit is connected to the switching unit and the framing unit separately.

The POTN interworking module is configured to convert the first Ethernet packet of the PTN service accessed by the PTN module into the first ODUk packet in a manner described below.

The switching unit is configured to receive the first Ethernet packet of the PTN service accessed by the PTN module, and forward the first Ethernet packet to the network processing unit; the network processing unit is configured to process the first Ethernet packet, and forward the processed first Ethernet packet to the framing unit; and the framing unit is configured to encapsulate the received first Ethernet packet through the GFP and obtain the first ODUk packet by mapping.

When the framing unit is further configured to forward the first ODUk packet to the switching unit, the switching unit is further configured to forward the first ODUk packet to the OTN module or a POTN convergence module.

Alternatively, when the framing unit is further configured to forward the second Ethernet packet to the switching unit through the network processing unit, the switching unit is further configured to forward the second Ethernet packet to the PTN module or the POTN convergence module.

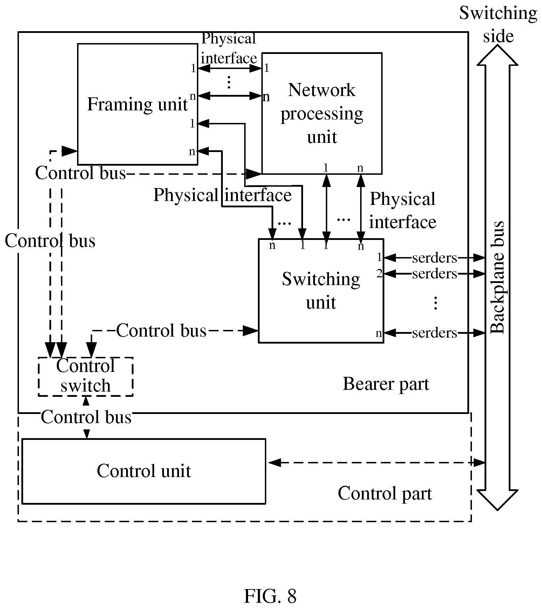

An internal structure of the POTN interworking module will be described with an example shown in FIG. 8. An exemplary POTN interworking module is a separate board in a POTN device. As shown in FIG. 8, the POTN interworking module includes the control unit, the framing unit, the network processing unit, and the switching unit.

The control unit is a software control part of the board and configured to receive the external control command and configure the switching unit, the network processing unit, and the framing unit through the control bus (such as a peripheral component interconnect express (PCIE) bus).

The switching unit mainly receives data from a switching system by using a serializer/deserializer (serders) technology and processes the data received from the switching system. For example, through a physical interface, the switching unit forwards a data packet of the PTN service to the network processing unit and forwards a TDM packet of the OTN service to the framing unit. In other words, the switching unit is configured to perform data interactions and transmissions in the POTN device to implement a cell and packet switching technology. The physical interface may be a physical bus Interlaken interface, which is a high-speed channelized chip-to-chip (C2C) interface. The serders is a mainstream time division multiplexing (TDM) and point-to-point (P2P) serial communication technology, that is, multiple low-speed parallel signals are converted into a high-speed serial signal at a transmitting end, and the high-speed serial signal pass through a transport medium (an optical cable or a copper wire) and is reconverted into the low-speed parallel signals at a receiving end.

The network processing unit is connected to the switching unit and the framing unit separately, and configured to process and encapsulate the data packet of the PTN service. For example, the network processing unit is configured to classify the Ethernet packets, tag different classes of Ethernet services and perform related Quality of Service (QoS) processing.

The framing unit is a core unit of the POTN interworking module, and is capable of supporting a mutual mapping between a PTN service packet format and an ODUk frame format of the OTN service. For example, the framing unit receives an Ethernet packet from an Interlaken interface of the network processing unit, performs a dynamic cache partition buffer (DCPB) in two directions and GFP encapsulation on the Ethernet packet, and maps the Ethernet packet to an ODUk frame structure corresponding to the OTN service and forwards it to the switching unit.

As shown in FIG. 8, a path of a PTN service data stream is the switching unit ==> the network processing unit ==> the framing unit, or the switching unit <== the network processing unit <== the framing unit; and a path of an OTN service data stream is the switching unit ==> the framing unit, or the switching unit <== the framing unit. Mappings and conversions between PTN service packets and OTN service packets are implemented in the framing unit.

An embodiment of the present application further provides a packet interworking method which is applied to a POTN system. The POTN system includes a PTN module, an OTN module, and a POTN interworking module. The POTN interworking module is configured to perform at least one of: receiving a first Ethernet packet of a PTN service accessed by the PTN module and converting the first Ethernet packet into a first ODUk packet; or receiving a second ODUk packet of an OTN service accessed by the OTN module and converting the second ODUk packet into a second Ethernet packet.

The packet interworking method in this embodiment includes steps described below.

In step 1, a PTN service configuration is performed in the PTN module and the POTN interworking module separately to establish an Ethernet packet transport channel between the PTN module and the POTN interworking module.

In step 2, an OTN service configuration is performed in the OTN module and the POTN interworking module separately to establish an ODUk packet transport channel between the OTN module and the POTN interworking module.

In an embodiment, an execution sequence of step 1 and step 2 is not limited.

The POTN interworking module may be disposed on a POTN convergence board; or the POTN interworking module may be a separate board; or the POTN interworking module may be disposed on a switching system board. For the description of the POTN system and the POTN interworking module, reference may be made to the embodiments described above, and thus no further details are provided herein.

In this embodiment, the step of performing the PTN service configuration in the PTN module and the POTN interworking module separately to establish the Ethernet packet transport channel between the PTN module and the POTN interworking module may include: configuring PTN service mapping information, a virtual port, a tunnel, a pseudowire label, and Ethernet service information in the POTN interworking module.

In this embodiment, the step of performing the OTN service configuration in the OTN module and the POTN interworking module separately to establish the ODUk packet transport channel between the OTN module and the POTN interworking module may include configuring OTN service mapping information and a cross-connection parameter in the POTN interworking module.

In an exemplary implementation manner, in an example in which the POTN system is applied to a POTN device, the POTN interworking module needs to be deployed in the POTN device in advance. That is, the POTN device needs to include the POTN interworking module in addition to existing PTN service board, OTN service board, and POTN convergence board. The POTN interworking module may be deployed on the POTN convergence board; or a board of the POTN interworking module may be newly added; or the POTN interworking module may be deployed on a switching system board.

In this implementation manner, in response to a direct interworking requirement between a PTN terminal and an OTN terminal in a network maintenance process, a network management system (for example, disposed on a personal computer (PC) client) is adopted to perform a PTN-related service configuration in the PTN service board and the POTN interworking module in the POTN device and perform an OTN-related service configuration in an OTN board card and the POTN interworking module. For example, the PTN-related service configuration includes a service mapping configuration, binding the virtual port, a tunnel pseudowire configuration, an Ethernet service configuration, and the like; and the OTN-related service configuration includes the service mapping configuration and a cross-connection configuration.

An embodiment of the present invention further provides a packet interworking method which is applied to a POTN interworking module. The method includes steps described below.

The POTN interworking module establishes, according to PTN service configuration information, an Ethernet packet transport channel between a PTN module and the POTN interworking module.

The POTN interworking module establishes, according to OTN service configuration information, an ODUk packet transport channel between an OTN module and the POTN interworking module.

The POTN interworking module performs at least one of: receiving a first Ethernet packet of a PTN service accessed by the PTN module and converting the first Ethernet packet into a first ODUk packet; or receiving a second ODUk packet of an OTN service accessed by the OTN module and converting the second ODUk packet into a second Ethernet packet.

The PTN service configuration information may include PTN service mapping information, a virtual port, a tunnel, a pseudowire label, and Ethernet service information.

The OTN service configuration information may include OTN service mapping information and a cross-connection parameter.

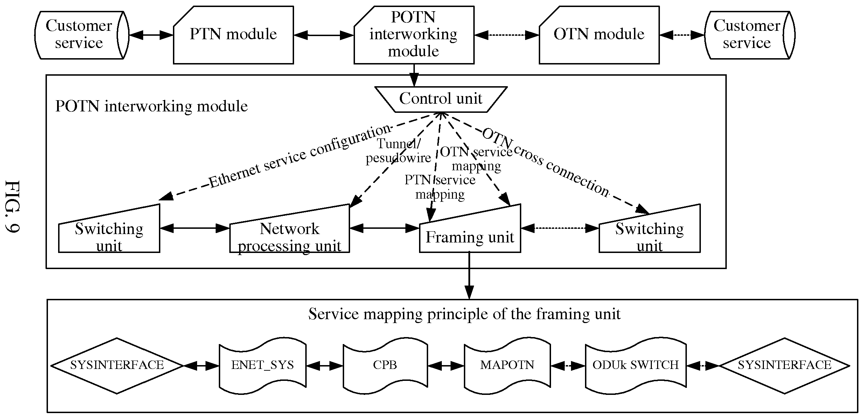

The packet interworking method in this embodiment is described below with reference to the example shown in FIG. 9. Each service that requires packet interworking may be configured in the POTN interworking module according to practical requirements. In FIG. 9, a solid line denotes a PTN service data stream, a dashed line denotes a control flow, and a dotted line denotes an OTN service data stream.

As shown in FIG. 9, a control unit of the POTN interworking module may configure PTN-related service data in manners described below.

Through configuring the service mapping information and the virtual port, a physical channel and a rate bandwidth parameter used by the present service are sent to a framing unit and a network processing unit of the POTN interworking module.

Through configuring the tunnel and the pseudowire label, a forwarding label parameter, a QoS and other related parameters of an Ethernet packet of the PTN service are sent to the network processing unit.

Through configuring the Ethernet service information, a PTN service board (the PTN module in FIG. 9) corresponding to the PTN service and related interface parameters are sent to a switching unit.

The framing unit, the network processing unit, and the switching unit are connected by configuring the PTN-related service data, so that a PTN service data packet transmitted by the PTN service board can successively flow through the switching unit, the network processing unit, and the framing unit. In the framing unit, the PTN service data packet is processed by an Ethernet processing subunit (ENET_SYS), a DCPB data buffer is performed by a storage buffer subunit (CPB), a service signal is encapsulated by an OTN mapping subunit (Map to OTN, MAPOTN) through a GFP mapping, an ODUk packet is further switched and transmitted by an ODUk switching subunit (ODUK SWITCH), thereby implementing a conversion to an ODUk frame format supported by an OTN.

As shown in FIG. 9, the control unit of the POTN interworking module may configure OTN-related service data in manners described below.

Through configuring the OTN service mapping information, OTN bandwidth, an OTN timeslot and other parameters are sent to the framing unit.

An ODUk cross connection of the switching unit is configured, so that the switching unit can switch and forward an OTN data packet of the POTN interworking module to an OTN service board (the OTN module in FIG. 9) through a backplane side.

Through the above configuration of the OTN-related service data, the ODUk switching subunit in the framing unit directly transmits an ODUk packet to the switching unit through a system interface (SYS_INTERFACE) on an OTN side, the switching unit cell transmits an ODUk frame to the OTN service board in a form of a cell, and a service signal is extracted in the OTN service board.

As shown in FIG. 9, after the configuration of the PTN-related service data and the configuration of the OTN-related service data, direct interworking and conversions of the service signal between a PTN Ethernet packet and an OTN ODUk frame format may be implemented in the framing unit of the POTN interworking module. The PTN Ethernet packet may be encapsulated into the OTN ODUk frame format in the follow process. After the PTN Ethernet packet is transmitted to a system side interface (SYSINTERFACE) on a PTN side, the Ethernet processing subunit (ENET_SYS) preforms protocol parsing on the PTN Ethernet packet, and then the packet is stored in the storage buffer subunit (CPB), and then the OTN mapping subunit (MAPOTN) performs GFP encapsulation to convert the packet into an ODUKi frame format on the OTN side, and then a packet in the ODUk frame format is switched and transmitted by the ODUk switching subunit (ODUk SWITCH) to a system side interface (SYSINTERFACE) on the OTN side. Since the mapping is bidirectional, the mapping from the packet in the ODUk frame format on the OTN side to the Ethernet packet on the PTN side in FIG. 9 has a same principle, and thus no further details are provided herein. In this way, the POTN interworking module may implement an interworking function between a PTN terminal and an OTN terminal in the POTN device.

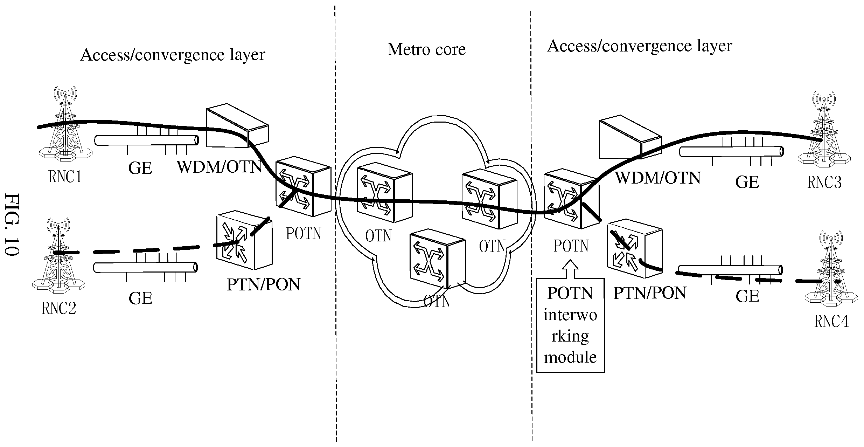

As shown in FIG. 10, based on the POTN device with the POTN interworking module, the RNC user device accessed through the PTN device and the RNC user device accessed through the POTN device can interwork with each other freely when they are converged by the POTN device. that is, in FIG. 10, the RNC1 and the RNC4 can interwork with each other, or the RNC3 and the RCN4 can interwork with each other, without network capacity expansion or network reorganizing, the direct interworking only needs to modify configurations of the POTN device.

### Embodiment 1

This embodiment is described by using a scenario of a dedicated bearer for group customers in a same city as an example.

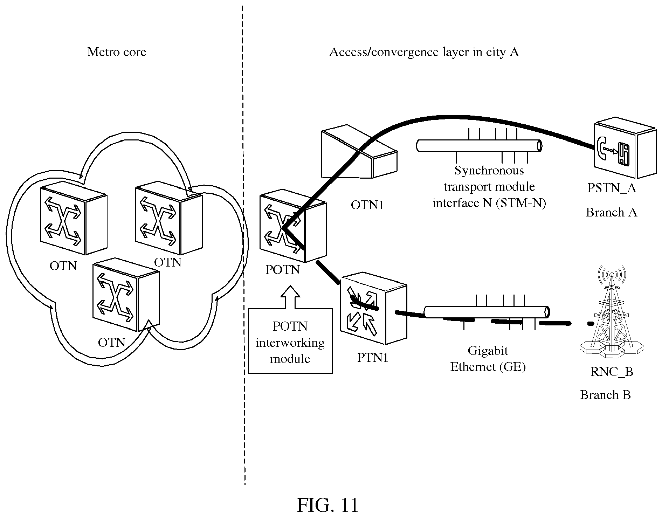

As shown in FIG. 11, an operator needs to establish an enterprise private network to provide an internal voice interworking service for two branches (such as a branch A and a branch B) of one group in the same city. Currently, the branch A accesses an OTN data transport network through a PSTN_A private network, and the branch B accesses a PTN data transport network through an RNC_B 3G radio network.

With the transport layer interworking, network interworking between a PTN1 transport device of the branch B and an OTN1 transport device of the opposite branch A may be implemented without performing network capacity expansion and manual network cutover operations, and a 3G private network RNC_B of the branch B does not need to be switched from the PTN1 transport device to the OTN1 transport device.

In this embodiment, the customer only needs to perform configurations on a POTN device through a remote operation on a network management system on a computer. A principle and a process for service interworking are described below. After data of the 3G private network RNC_B of the branch B is transmitted from the PTN1 transport device to the POTN device, the POTN device is configured through the network management system, so that a service data stream flows from a PTN service board to a POTN interworking module through a switching system on a backplane side.

The implementation principle of the POTN interworking module is as follows. As shown in FIG. 9, after a service packet arrives at a switching unit of the POTN interworking module, a service signal is transmitted by a network processing unit to a framing unit, and then the service signal is processed in an ENET_SYS subunit, a CPB subunit, and a MAPOTN subunit successively in the framing unit, and the service signal is directly converted by an ODUK SWITCH subunit into an ODUk frame format supported by an OTN, so that the service packet enters the OTN1 device of a PSTN_A through an OTN switching system on the backplane side, that is, the PSTN_A is docked with an RNC_B in FIG. 11.

In the present embodiment, a customer docking requirement may be satisfied through only simple configurations in the network management system instead of network capacity expansion and network reorganizing, reducing transport network maintenance costs, improving transport network maintenance flexibility, and reducing a transmission delay in interworking scenarios in some cities.

### Embodiment 2

This embodiment is described by using a scenario of interworking between a PTN and an OTN across cities as an example.

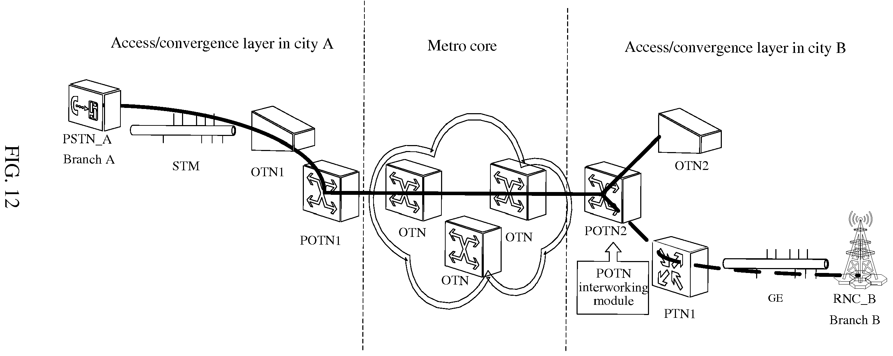

As shown in FIG. 12, in a metropolitan area network for POTN transmissions, two branches of one group (such as a branch A and a branch B) are located in different cities and need a private network voice interworking service. The branch A accesses an OTN1 for network transmissions through a PSTN_A private network in a city A, and the branch B accesses a PTN data transport network through an RNC_B 3G radio network in a city B.

Currently, to implement interworking between the branch A and the branch B, service data of the branch A needs to be transmitted through the PSTN_A, encapsulated by an OTN1 device and a POTN1 device at an access layer, and transported across cities through an OTN. The service data is decapsulated by a POTN2 device that is docked with the branch B in the city B city. Since an OTN1 data format cannot directly interwork with a PTN1 data format, network capacity expansion and transformations need to be performed on existing networks, a POTN2 and an OTN2 to connect an RNC_B device to an OTN2 device to implement interworking between a PSTN_A and an RNC_B in a PTN-OTN manner.

In this embodiment, the service data is uploaded by a station PSTN_A, and then transmitted from the device accessed by the PSTN_A in the city A to the city B through the OTN. When the service data is in a POTN2 device in the city B, a docking service configuration only needs to be performed on a POTN interworking module of the POTN2 device: the POTN2 device forwards a signal in an ODUK frame format transmitted by the OTN1 device in the city A to the PTON interworking module through an OTN switching system of a backplane; and the POTN interworking module implements a protocol mapping function from the ODUk frame format to an Ethernet packet to convert the signal into a packet format supported by a PTN device, and transmits the signal to a PTN board card through a switching system of the backplane to transmitted to a PTN1 device. In this way, a mapping between OTN and PTN protocol packet formats is implemented by the POTN interworking module, and direct docking between the PTSN_A and the RNC_B is completed.

In this process, a customer only needs to perform related configurations through a remote operation on a network management system of a computer to implement service interworking without device capacity expansion and network reorganizing, greatly reducing network maintenance costs and improving deployment efficiency.

In summary, the embodiments of the present invention solve the problem that the interworking between the PTN terminal and the OTN terminal is not supported in a current POTN system, and implement interworking and conversions between the Ethernet packet format of the PTN service and the ODUK packet format of the OTN service through the POTN interworking module, which facilitates further merging and interworking between the POTN system and a network, achieves an effect of implementing the interworking between the PTN terminal and the OTN terminal without the transformations on the existing network, saves inputs on device hardware resources and site thread cutover operations due to the existing network cutover operation, improves the transmission flexibility of communication network services, and reduces the transmission delay in interworking scenarios in some cities.

In addition, an embodiment of the present invention further provides a computer-readable storage medium configured to store computer-executable instructions for executing the above-mentioned packet interworking methods when executed by a processor.

It should be understood by those skilled in the art that all or part of the steps in the methods described above may be implemented by relevant hardware (such as a processor) as instructed by programs, and the programs may be stored in a computer-readable storage medium, such as a read-only memory (ROM), a magnetic disk, or an optical disk. In an implementation manner, all or part of the steps in the embodiments described above may also be implemented by using one or more integrated circuits. Accordingly, the modules/units in the embodiments described above may be implemented by hardware. For example, the functions of these modules/units may be implemented by an integrated circuit. Alternatively, these modules/units may be implemented by software function modules. For example, the functions of these modules/units may be implemented by using a processor to execute programs/instructions stored in a memory. The present application is not limited to any specific combination of hardware and software.

### INDUSTRIAL APPLICABILITY

The POTN system, the POTN interworking module, and the packet interworking method in the present disclosure can implement the direct interworking between the PTN terminal and the OTN terminal in the POTN system, thereby reducing frequent reorganizing in a customer network maintenance process, avoiding wastes of transport network bandwidth and related hardware resources, improving transmission flexibility of communication network services and a service processing capability and service transmission efficiency of an existing network device, and promoting further merging and optimization of the POTN.

## Claims

1. A packet optical transport network, POTN, system, comprising: a packet transport network, PTN, module, an optical transport network, OTN, module, and a POTN interworking module;
wherein the POTN interworking module is configured to be connected to the PTN module and the OTN module separately, and is configured to perform at least one of: receiving a first Ethernet packet of a PTN service accessed by the PTN module and converting the first Ethernet packet into a first optical channel data unit, ODUk, packet; or receiving a second ODUk packet of an OTN service accessed by the OTN module and converting the second ODUk packet into a second Ethernet packet.

2. The POTN system of claim 1, wherein the POTN interworking module comprises a framing unit, configured to implement conversions between an Ethernet packet and an ODUk packet.

3. The POTN system of claim 2, wherein the framing unit comprises an Ethernet processing subunit, a storage buffer subunit, an OTN mapping subunit, and an ODUk switching subunit; wherein
the framing unit is configured to convert the first Ethernet packet into the first ODUk packet in the following manner:
the Ethernet processing subunit is configured to process the received first Ethernet packet to obtain a service signal carried in the first Ethernet packet, the storage buffer subunit is configured to buffer the service signal carried in the first Ethernet packet, the OTN mapping subunit is configured to encapsulate the service signal carried in the first Ethernet packet through a generic framing procedure, GFP, to obtain the first ODUk packet, and the ODUk switching subunit is configured to transmit the first ODUk packet;
wherein the framing unit is configured to convert the second ODUk packet into the second Ethernet packet in the following manner:
the ODUk switching subunit is configured to receive the second ODUk packet, the OTN mapping subunit is configured to decapsulate the second ODUk packet through the GFP to obtain a service signal, the storage buffer subunit is configured to buffer the service signal obtained by decapsulating the second ODUk packet, and the Ethernet processing subunit is configured to encapsulate the service signal obtained by decapsulating the second ODUk packet into the second Ethernet packet.

4. The POTN system of claim 2, wherein the POTN interworking module further comprises a control unit, which is connected to the framing unit, and configured to receive an external control command and configure the framing unit through a control bus.

5. The POTN system of claim 2, wherein the POTN interworking module further comprises a switching unit connected to the framing unit;
wherein the POTN interworking module is configured to convert the second ODUk packet of the OTN service accessed by the OTN module into the second Ethernet packet in the following manner:
the switching unit is configured to receive the second ODUk packet of the OTN service accessed by the OTN module, and forward the second ODUk packet to the framing unit; and the framing unit is configured to decapsulate the received second ODUk packet through a GFP and obtain the second Ethernet packet by mapping.

6. The POTN system of claim 5, wherein the POTN interworking module further comprises a network processing unit, which is connected to the switching unit and the framing unit separately;
wherein the POTN interworking module is configured to convert the first Ethernet packet of the PTN service accessed by the PTN module into the first ODUk packet in the following manner:
the switching unit is configured to receive the first Ethernet packet of the PTN service accessed by the PTN module, and forward the first Ethernet packet to the network processing unit; the network processing unit is configured to process the first Ethernet packet, and forward the processed first Ethernet packet to the framing unit; and the framing unit is configured to encapsulate the received first Ethernet packet through the GFP and obtain the first ODUk packet by mapping.

7. The POTN system of claim 1, further comprising: a POTN convergence module, which is configured to converge the first Ethernet packet of the PTN service and converge the second ODUk packet of the OTN service, and transport the converged first Ethernet packet and the converged second ODUk packet.

8. The POTN system of claim 7, wherein the POTN interworking module is further configured to: after converting the first Ethernet packet of the PTN service accessed by the PTN module into the first ODUk packet, forward the first ODUk packet to the OTN module or the POTN convergence module; and
the POTN interworking module is further configured to: after converting the second ODUk packet of the OTN service accessed by the OTN module into the second Ethernet packet, forward the second Ethernet packet to the PTN module or the POTN convergence module.

9. The POTN system of any one of claims 1 to 8, wherein the POTN interworking module is disposed on a POTN convergence board; or
wherein the POTN interworking module is a separate board; or
wherein the POTN interworking module is disposed on a switching system board.

10. A packet optical transport network, POTN, interworking module, comprising: a framing unit, wherein the framing unit is configured to perform at least one of: converting a first Ethernet packet into a first optical channel data unit, ODUk, packet, or converting a second ODUk packet into a second Ethernet packet.

11. The POTN interworking module of claim 10, wherein the framing unit comprises an Ethernet processing subunit, a storage buffer subunit, an optical transport network, OTN, mapping subunit, and an ODUk switching subunit;
wherein the Ethernet processing subunit is configured to process the received first Ethernet packet to obtain a service signal carried in the first Ethernet packet, the storage buffer subunit is configured to buffer the service signal carried in the first Ethernet packet, the OTN mapping subunit is configured to encapsulate the service signal carried in the first Ethernet packet through a generic framing procedure, GFP, to obtain the first ODUk packet, and the ODUk switching subunit is configured to transmit the first ODUk packet; or
the ODUk switching subunit is configured to receive the second ODUk packet, the OTN mapping subunit is configured to decapsulate the second ODUk packet through the GFP to obtain a service signal, the storage buffer subunit is configured to buffer the service signal obtained by decapsulating the second ODUk packet, and the Ethernet processing subunit is configured to encapsulate the service signal obtained by decapsulating the second ODUk packet into the second Ethernet packet.

12. The POTN interworking module of claim 10, further comprising: a control unit, wherein the control unit is connected to the framing unit, and configured to receive an external control command and configure the framing unit through a control bus.

13. The POTN interworking module of claim 10, further comprising: a switching unit; wherein the switching unit is connected to the framing unit; and the POTN interworking module is configured to convert the second ODUk packet of an OTN service accessed by an OTN module into the second Ethernet packet in the following manner:
the switching unit is configured to receive the second ODUk packet of the OTN service accessed by the OTN module, and forward the second ODUk packet to the framing unit; and the framing unit is configured to decapsulate the received second ODUk packet through a GFP and obtain the second Ethernet packet by mapping.

14. The POTN interworking module of claim 13, further comprising: a network processing unit; wherein the networking unit is connected to the switching unit and the framing unit separately;
wherein the POTN interworking module is configured to convert the first Ethernet packet of a packet transport network, PTN, service accessed by a PTN module into the first ODUk packet in the following manner:
the switching unit is configured to receive the first Ethernet packet of the PTN service accessed by the PTN module, and forward the first Ethernet packet to the network processing unit; the network processing unit is configured to process the first Ethernet packet, and forward the processed first Ethernet packet to the framing unit; and the framing unit is configured to encapsulate the received first Ethernet packet through the GFP and obtain the first ODUk packet by mapping.

15. The POTN interworking module of claim 14, wherein when the framing unit is further configured to forward the first ODUk packet obtained by converting to the switching unit, the switching unit is further configured to forward the first ODUk packet to the OTN module or a POTN convergence module; and
when the framing unit is further configured to forward the second Ethernet packet obtained by converting to the switching unit through the network processing unit, the switching unit is further configured to forward the second Ethernet packet to the PTN module or the POTN convergence module.

16. A packet interworking method, applied to a packet optical transport network, POTN, interworking module, comprising:
receiving, by the POTN interworking module, a first Ethernet packet of a packet transport network, PTN, service accessed by a PTN module, and converting the first Ethernet packet into a first optical channel data unit, ODUk, packet; and
receiving, by the POTN interworking module, a second ODUk packet of an optical transport network, OTN, service accessed by an OTN module, and converting the second ODUk packet into a second Ethernet packet.

17. The packet interworking method of claim 16, further comprising:
performing a PTN service configuration in the PTN module and the POTN interworking module separately to establish an Ethernet packet transport channel between the PTN module and the POTN interworking module; and
performing an OTN service configuration in the OTN module and the POTN interworking module separately to establish an ODUk packet transport channel between the OTN module and the POTN interworking module.

18. The packet interworking method of claim 17, wherein performing the PTN service configuration in the POTN interworking module comprises:
configuring PTN service mapping information, a virtual port, a tunnel, a pseudowire label, and Ethernet service information in the POTN interworking module.

19. The packet interworking method of claim 17, wherein performing the OTN service configuration in the POTN interworking module comprises:
configuring OTN service mapping information and a cross-connection parameter in the POTN interworking module.

20. The packet interworking method of any one of claims 16 to 19, wherein the POTN interworking module is disposed on a POTN convergence board; or
wherein the POTN interworking module is a separate board; or
wherein the POTN interworking module is disposed on a switching system board.
